# EUROPÄISCHE PATENTSCHRIFT

(11) **EP 0 921 622 B1**
(45) Veröffentlichungstag und Bekanntmachung des Hinweises auf die Patenterteilung: **29.08.2001**
(21) Anmeldenummer: 98122259.9
(22) Anmeldetag: 24.11.1998
(51) Int. Cl.: H02K 5/04, H02K 15/14

(54) **Verfahren zur Herstellung eines Motorgehäuses eines Elektromotors sowie Motorgehäuse eines Elektromotors**
Manufacturing method of an electric motor casing and an electric motor casing
Méthode de fabrication d'un boitier d'un moteur électrique ainsi qu'un boitier de moteur électrique

(30) Priorität: 08.12.1997 DE 19754361
(43) Veröffentlichungstag der Anmeldung: 09.06.1999
(73) Patentinhaber: WILLY VOIT GMBH & Co., D-66386 St Ingbert (DE)
(72) Erfinder: Schmitt, Rainer, 66386 St. Ingbert (DE)
(74) Vertreter: Wieske, Thilo

(56) Entgegenhaltungen:
- DE-A- 3 036 941
- GB-A- 2 256 093
- PATENT ABSTRACTS OF JAPAN vol. 014, no. 145 (E-0905), 19. März 1990 & JP 02 007860 A (NIPPON DENSO CO LTD), 11. Januar 1990

## Beschreibung

Die Erfindung betrifft ein Verfahren zur Herstellung eines Motorgehäuses eines Elektromotors mit einem Rückschlussring nach dem Oberbegriff des Patentanspruches 1 sowie ein Motorgehäuse eines Elektromotors nach dem Oberbegriff des Patentspruches 4.

Aus der GB-A-2256093 ist ein Motorgehäuse bekannt, bei dem in ein äußeres Motorgehäuse ein Rückschlussblech eingebracht wird. Dieses Rückschlussblech ist als Zylindermantelfläche ausgebildet und entlang dieser Zylindermantelfläche mit einem Spalt versehen. Dieses Rückschlussblech ist federelastisch vorgespannt. Durch den Spalt, der in das Rückschlussblech eingebracht ist, lässt sich dieses Rückschlussblech entgegen dieser federelastischen Vorspannung zusammendrücken, so dass das Rückschlussblech in das Motorgehäuse eingebracht werden kann. Wenn das Rückschlussblech eingebracht ist, wird das Zusammendrücken beendet. Durch die federelastische Vorspannung wird dann das Rückschlussblech auseinandergedrückt und kommt auf der Innenseite des Motorgehäuses zum Anliegen, wobei dieses Anliegen entsprechend der federelastischen Vorspannung kraftschlüssig ist.

Aus der DE 28 10 215 C3 ist es weiterhin bekannt, um ein Motorgehäuse eines Elektromotors ein Rückschlussblech herumzubiegen. Dieses Rückschlussblech wird dann entlang der Kante verbunden, die längs der Mantellinie vorhanden sein muss, um das Rückschlussblech um das Motorgehäuse herumzubiegen.

Demgegenüber ist es die Aufgabe der vorliegenden Erfindung, ein Verfahren zur Herstellung eines Motorgehäuses vorzuschlagen, bei dem möglichst geringe Luftspalte im magnetischen Kreis entstehen.

Diese Aufgabe wird erfindungsgemäß gelöst, indem durch einen mechanischen Bearbeitungsvorgang das Motorgehäuse in seiner äußeren Form und Abmessung so verändert wird, dass die Innenseite des Motorgehäuses an der Außenseite des Rückschlussringes anliegt und dadurch den Rückschlussring kraftschlüssig hält.

Ein optimaler magnetischer Fluss stellt sich dann ein, wenn Luftspalte im magnetischen Kreis möglichst gering sind. Es erweist sich daher als vorteilhaft, als Rückschlussblech einen Rückschlussring vorzusehen, der in dem Motorgehäuse angeordnet ist, wobei durch die vorliegende Erfindung weiterhin eine präzise Fertigung des Rückschlussringes im Hinblick auf die Genauigkeit des Innendurchmessers und damit geringe Luftspalte im magnetischen Kreis erzielbar sind. Aufgrund abweichender Materialdicken des Rückschlussringes ergeben sich für die einzelnen Rückschlussringe unterschiedliche Außendurchmesser.

Vorteilhaft wird daher gemäß Anspruch 1 der Innendurchmesser des Motorgehäuses dem Außendurchmesser des in dem Motorgehäuse befindlichen Rückschlussringes durch einen mechanischen Bearbeitungsvorgang angepasst.

Dadurch wird vorteilhaft erreicht, dass der Rückschlussring in dem Motorgehäuse gehalten wird, ohne dass separate Befestigungsmittel wie Vorsprünge oder dergleichen vorhanden sein müssen.

Weiterhin wird die Dicke des magnetischen Rückschlusses vergrößert, weil durch das enge Anliegen die Wand des Motorgehäuses ebenfalls als Rückschlussblech wirkt. Die wirksame Dicke des Rückschlusselementes entspricht also nicht lediglich der Dicke des Rückschlussringes sondern zusätzlich der Dicke der Gehäusewand des Motorgehäuses.

Weiterhin erweist es sich bei dem Herstellungsverfahren als vorteilhaft, dass ein geschlossener Rückschlussring Verwendung finden kann, wodurch sich ebenfalls der magnetische Rückschluss verbessert.

Der mechanische Bearbeitungsvorgang kann beispielsweise aus einem Abstreckvorgang bestehen, wie dies im Zusammenhang mit Anspruch 3 erläutert ist oder in einem Pressvorgang, durch den die Gehäusewand direkt an den Rückschlussring angepresst wird.

Bei dem Verfahren nach Anspruch 2 ist das Motorgehäuse topfförmig gezogen, wobei die Seitenwand des Motorgehäuses mechanisch bearbeitet wird.

Dadurch kann zunächst in einem ersten Arbeitsschritt das Motorgehäuse hergestellt werden, wobei in einem nachfolgenden Arbeitsschritt auf vergleichsweise einfache Weise der mechanische Bearbeitungsvorgang durchgeführt werden kann, mittels dem der Rückschlussring in dem Motorgehäuse befestigt wird.

Bei dem Verfahren nach Anspruch 3 wird das Motorgehäuse abgestreckt, indem während des Herstellvorganges ein Abstreckring passenden Innendurchmessers über den topfförmigen Teil des Motorgehäuses gebracht wird.

Dadurch wird der Innendurchmesser sowie der Außendurchmesser der Gehäusewand des Motorgehäuses verringert, wobei der topfförmige Teil des Motorgehäuses verlängert wird. Das Motorgehäuse behält dabei sein Form bei und der Rückschlussring wird kraftschlüssig in dem Motorgehäuse gehalten.

Anspruch 4 betrifft ein Motorgehäuse mit einem Rückschlussring, das nach einem der vorgenannten Verfahren hergestellt ist.

Zum einen ergibt sich eine optimale Dicke des wirksamen Rückschlusses, weil sowohl die Gehäusewand wie auch der eigentliche Rückschlussring als Rückschluss wirken. Indem der Rückschlussring in das Motorgehäuse eingebracht ist und das Motorgehäuse durch den Bearbeitungsvorgang dem Außendurchmesser des Rückschlussringes angepasst wird, kann der Innendurchmesser des Rückschlussringes mit großer Genauigkeit so gefertigt werden, dass Luftspalte minimal werden.

Bei dem Motorgehäuse nach Anspruch 5 ist der Rückschlussring in sich geschlossen.

Dadurch wird vorteilhaft ein optimaler Rückschluss gewährleistet. Gleichzeitig zeigt sich, dass das Motorgehäuse nach wie vor einfach herstellbar ist.

Ein Ausführungsbeispiel der Erfindung ist in der Zeichnung dargestellt. Es zeigt dabei
- Fig. 1:: ein topfförmiges Motorgehäuse eines Elektromotors,
- Fig. 2:: ein Rückschlussring und
- Fig. 3:: das Motorgehäuse mit dem darin befindlichen Rückschlussring nach dem Herstellvorgang.

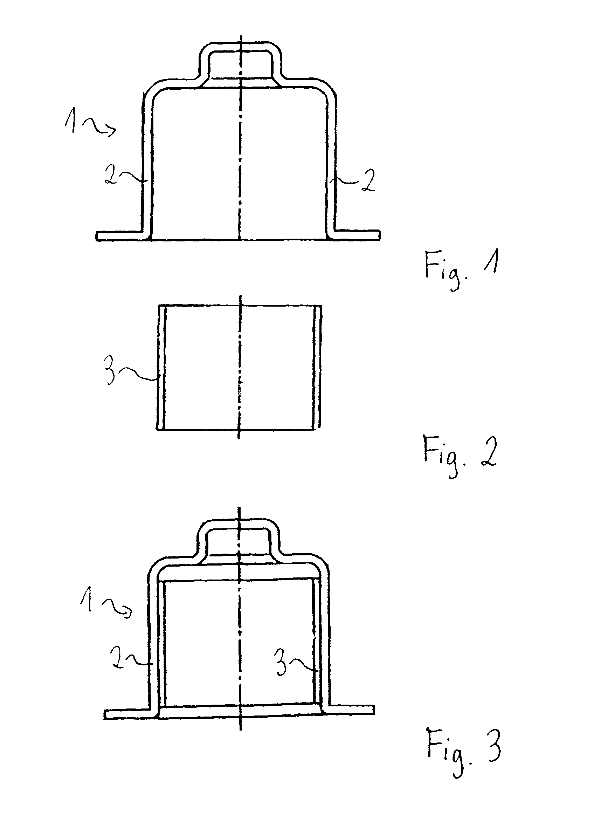

Figur 1 zeigt ein topfförmiges Motorgehäuse 1 eines Elektromotors. Das Motorgehäuse 1 kann beispielsweise durch einen Ziehvorgang hergestellt worden sein. Dieses topfförmige Motorgehäuse 1 weist eine Seitenwand 2 auf, die nachfolgend einem mechanischen Bearbeitungsvorgang unterzogen wird.

Figur 2 zeigt einen Rückschlussring 3, dessen Innendurchmesser bei der Herstellung präzise eingehalten wird. Dadurch werden eventuell Luftspalte weitgehend vermieden. Aufgrund von Materialtoleranzen können die Außendurchmesser unterschiedlicher Rückschlussringe 3 Abweichungen unterliegen. Diese Außendurchmesser der Rückschlussringe 3 sowie die Innendurchmesser der Motorgehäuse 1 sind so ausgelegt, dass die Motorgehäuse 1 mit einem gewissen Spiel über die Rückschlussringe 3 gestülpt werden können.

Figur 3 zeigt das Motorgehäuse 1, dessen Seitenwand 2 durch einen mechanischen Bearbeitungsvorgang derart verändert wurde, dass diese Seitenwand 2 den Rückschlussring 3 kraftschlüssig umschließt. Dieser mechanische Bearbeitungsvorgang kann beispielsweise ein Pressvorgang sein. Beispielsweise kann ein Abstreckring über die Seitenwand 2 gestülpt werden, dessen Innendurchmesser so bemessen ist, dass sich die Seitenwand 2 kraftschlüssig an den Rückschlussring 3 anlegt. Durch die Materialverformung der Seitenwand 2 kommt es zu einer Verlängerung des topfförmigen Teiles des Motorgehäuses 1.

Der Rückschlußring 3 kann in sich geschlossen sein ohne eine Trennlinie entlang seiner Mantelfläche, so daß sich ein optimaler magnetischer Fluß ergibt.

## Patentansprüche

1. Verfahren zur Herstellung eines Motorgehäuses (1) eines Elektromotors mit einem Rückschlussring (3), wobei sich der Rückschlussring (3) innerhalb des Motorgehäuses (1) befindet, wobei der Rückschlussring kraftschlüssig im Motorgehäuse gehalten wird,
**dadurch gekennzeichnet,** dass durch einen mechanischen Bearbeitungsvorgang das Motorgehäuse (1, 2) in seiner äußeren Form und Abmessung so verändert wird, dass die Innenseite des Motorgehäuses (1, 2) an der Außenseite des Rückschlussringes (3) anliegt und dadurch den Rückschlussring kraftschlüssig hält.

2. Verfahren nach Anspruch 1,
**dadurch gekennzeichnet,** dass das Motorgehäuse (1) topfförmig gezogen ist, wobei die Seitenwand (2) des Motorgehäuses (1) mechanisch bearbeitet wird.

3. Verfahren nach Anspruch 2,
**dadurch gekennzeichnet,** dass das Motorgehäuse (1) abgestreckt wird, indem während des Herstellvorganges ein Abstreckring passenden Innendurchmessers über den topfförmigen Teil des Motorgehäuses (1) gebracht wird.

4. Topfförmiges Motorgehäuse (1) eines Elektromotors mit einem Rückschlussring (3), wobei der Rückschlussring (3) kraftschlüssig im Motorgehäuse (1) gehalten wird,
**gekennzeichnet durch** die Herstellung nach einem der vorgenannten Verfahren.

5. Motorgehäuse nach Anspruch 4,
**dadurch gekennzeichnet**, dass der Rückschlussring (3) in sich geschlossen ist.

## Claims

1. A method of manufacturing an electric motor casing (1) having a magnetic return ring (3), the return ring (3) being located within the electric motor casing (1) where it is anchored by frictional forces,
**characterised in that** the outer shape and dimensions of the electric motor casing (1, 2) are altered by means of mechanical working in such a way that the inner surface of the electric motor casing (1, 2) is in contact with the outer surface of the return ring (3) and thus anchors the latter by virtue of frictional forces.

2. The method of claim 1,
**characterised in that** the electric motor casing (1) is drawn to a pot shape and the side wall (2) of the electric motor casing (1) is worked mechanically.

3. The method of claim 2,
**characterised in that** the electric motor casing (1) undergoes an ironing process effected during manufacturing by placing an ironing ring of suitable internal diameter over the pot-shaped section of the electric motor casing (1).

4. A pot-shaped electric motor casing (1) for an electric motor, having a return ring (3) which is anchored within the electric motor casing (1) by frictional forces,
**characterised in that** the electric motor casing is manufactured according to one of the preceding claims.

5. The electric motor casing of claim 4,
**characterised in that** the return ring (3) is closed.

## Revendications

1. Procédé pour la fabrication d'un boîtier de moteur (1) d'un moteur électrique comprenant une bague de reflux (3), la bague de reflux (3) se trouvant à l'intérieur du boîtier du moteur (1), la bague de reflux étant maintenue dans le boîtier de moteur par adhérence, **caractérisé en ce que,** dans une étape d'usinage mécanique, la forme extérieure et les dimensions du boîtier de moteur (1, 2) sont modifiées de telle sorte que la face interne du boîtier de moteur (1, 2) est adjacente à la face externe de la bague de reflux (3) et par conséquent retient la bague de reflux par adhérence.

2. Procédé selon la revendication 1, **caractérisé en ce que** le boîtier du moteur (1) est étiré en forme de pot, la paroi latérale (2) du boîtier de moteur (1) étant usinée mécaniquement.

3. Procédé selon la revendication 2, **caractérisé en ce que** le boîtier du moteur est étiré lors du processus de fabrication en introduisant par la partie en forme de pot du boîtier de moteur (1) un anneau d'étirage de diamètre correspondant.

4. Boîtier de moteur (1) en forme de pot d'un moteur électrique avec une bague de reflux (3), la bague de reflux étant maintenue par adhérence dans le boîtier de moteur (1), **caractérisé** par la fabrication selon l'un des procédés précités.

5. Boîtier de moteur selon la revendication 4, **caractérisé en ce que** la bague de reflux (3) est en une pièce continue.
